# EUROPEAN PATENT APPLICATION

(11) **EP 4 835 978 A1**
(43) Date of publication of application: **04.11.2026**
(21) Application number: 24936663.4
(22) Date of filing: 23.10.2024
(51) Int. Cl.: H01M 4/13, H01M 4/02, H01M 10/052

(54) **BATTERY CELL, BATTERY AND ELECTRIC DEVICE**

(30) Priority: 25.04.2024 CN 202410502853
(71) Applicant: Contemporary Amperex Technology Co., Limited, Ningde, Fujian 352100 (CN)
(72) Inventor: TANG, Zhenguang, Ningde, Fujian 352100 (CN); SHANG, Hongwu, Ningde, Fujian 352100 (CN); ZHANG, Shengwu, Ningde, Fujian 352100 (CN); LIU, Bobo, Ningde, Fujian 352100 (CN); ZHANG, Duanyong, Ningde, Fujian 352100 (CN)
(74) Representative: Straus, Alexander
(86) International application number: PCT/CN2024/126763
(87) International publication number: WO 2025/222771

(57) **Abstract**

The present application belongs to the technical field of batteries. Provided are a battery cell, a battery and an electric device. The battery cell comprises a battery electrode sheet. The battery electrode sheet comprises a current collector, an active layer, a first insulating layer and a second insulating layer, wherein a connecting surface is formed on the current collector; the active layer covers part of the connecting surface, and a first edge is formed on the connecting surface; the first insulating layer covers part of the connecting surface, and the first insulating layer is arranged to extend along the first edge; and the second insulating layer covers the first insulating layer. The present application aims to reduce the risk of burr exposure during electrode sheet die-cutting, thereby reducing the risk of short circuits in battery cells.

## Description

The present application claims priority to Chinese Patent Application No. 2024105028539, filed with the China National Intellectual Property Administration on April 25, 2024 and entitled "Battery Cell, Battery, and Electric Device", the entire content of which is incorporated herein by reference.

### TECHNICAL FIELD

The present application relates to the field of battery technologies, and in particular, to an assembly method for a battery cell, a battery, and an electric device.

### BACKGROUND

A battery cell in a battery generally includes a positive electrode sheet, a negative electrode sheet, a separator, a housing, and the like, the positive electrode sheet, the negative electrode sheet, and the separator are assembled by winding or laminating to form an electrode assembly, and the electrode assembly is placed in the housing and an electrolyte is injected into the housing to form the battery cell.

In a manufacturing process of battery electrode sheets, the positive electrode sheet and the negative electrode sheet need to be die-cut, and die-cutting of the battery electrode sheets refers to a processing process of cutting or slicing an original material into the battery electrode sheets of required sizes and shapes, for example, cutting out tabs. Die-cutting is one of key steps in a manufacturing process of the battery cell, and quality and accuracy thereof directly affect performance and stability of the battery cell.

In a related art, when the electrode sheet is die-cut, burrs are easily generated at a cutting edge, and the burrs easily pierce the separator to cause the positive electrode sheet and the negative electrode sheet to be conductive, which cannot ensure insulation between the positive electrode sheet and the negative electrode sheet, resulting in a risk of short circuit.

### SUMMARY

A purpose of embodiments of the present application lies in that: An assembly method for a battery cell, a battery, and an electric device are provided, to solve a technical problem that burrs are easily generated in a die-cutting process of an electrode sheet, and a risk of short circuit is easily generated in the battery cell.

### TECHNICAL SOLUTION

An embodiment of the present application adopts the technical solutions below:

In a first aspect, the present application provides a battery cell that includes the battery electrode sheet, where the battery electrode sheet includes:
a current collector, a connecting surface being formed on the current collector;
an active layer, covering part of the connecting surface, where a first edge is formed on the connecting surface;
a first insulating layer, covering part of the connecting surface, where the first insulating layer extends along the first edge; and
a second insulating layer, covering the first insulating layer.

In this embodiment, the first insulating layer and the second insulating layer are respectively coated and covered at a die-cutting position of the current collector, so that the first insulating layer is directly connected to the current collector, and the first insulating layer can play a role of insulating the current collector, thereby reducing a risk of short circuit and electric leakage between the electrode sheets during winding. The second insulating layer covers the first insulating layer, thereby increasing an overall thickness of the insulating layer. The current collector, the first insulating layer and the second insulating layer are cut at the same time during die-cutting, so that the first insulating layer and the second insulating layer form a thicker package for a cutting position of the current collector, the burrs are not easily exposed, a risk of exposure of the burrs is reduced, and a risk of short circuit of the battery cell is reduced.

In one of embodiments, the second insulating layer has a second edge disposed close to the first edge, and the second edge is spaced apart from the first edge.

In this embodiment, the second insulating layer is spaced apart from the active layer, and the second insulating layer can be made of a material having relatively low cost and relatively low thermal stability, thereby reducing a production cost of the battery electrode sheet. In addition, spacing is provided, which is conducive to folding of the tabs and reduces a risk of edge bulging of the battery electrode sheet.

In one of embodiments, the first insulating layer has a third edge disposed close to the first edge, and the third edge is connected to or spaced apart from the first edge.

In this embodiment, the first insulating layer is spaced apart from the active layer, which can further increase space, facilitate folding of the tabs, and further reduce the risk of edge bulging of the battery electrode sheet. In addition, a risk of melting and infiltration between the first insulating layer and the active layer is reduced. When the first insulating layer is connected to the active layer, the first insulating layer may be made of a material having higher thermal stability than the second insulating layer, which is conducive to improving the thermal stability of an entire electrode sheet.

In one of embodiments, first spacing is formed between the second edge and the first edge, the first spacing has a first spacing distance in a direction parallel to the connecting surface, and the first spacing distance is greater than 0 mm and less than or equal to 3 mm.

In this embodiment, the first spacing distance is set to be greater than 0 mm and less than or equal to 3 mm, which is conducive to ensuring that the tabs have sufficient folding space, reduces the risk of edge bulging of the battery electrode sheet, and is not easy to cause energy density loss of the battery, and is conducive to ensuring performance stability of the battery.

In one of embodiments, the second insulating layer further has a fourth edge disposed away from the active layer, the fourth edge is disposed opposite to the second edge, and the fourth edge extends to a surface of the current collector.

In this embodiment, the fourth edge extends to the surface of the current collector, so that the second insulating layer can also be directly connected and adsorbed to a connecting surface of the current collector. This enhances connection strength between the second insulating layer and the connecting surface, and reduces a risk of the first insulating layer and a connecting surface between the second insulating layer and the current collector being detached.

In one of embodiments, in a case where the third edge is spaced apart from the first edge, the second edge extends to the surface of the current collector.

In this embodiment, the second edge extends to the surface of the current collector, so that the second insulating layer can also be directly connected and adsorbed to a connecting surface of the current collector. This enhances connection strength between the second insulating layer and the connecting surface, and reduces the risk of the first insulating layer and the connecting surface between the second insulating layer and the current collector being detached.

In one of embodiments, the second insulating layer has a second edge disposed close to the first edge, and the second edge is disposed in contact with the first edge.

In this embodiment, the second insulating layer covers an upper portion of the first insulating layer, so that the second insulating layer is directly connected to the active layer. This improves overall consistency between the active layer and the second insulating layer on the connecting surface of the current collector and the connection strength between the second insulating layer and the active layer, and enhances overall stability of the electrode sheet.

In one of embodiments, the second insulating layer has a fourth edge disposed away from the first edge, the fourth edge is disposed opposite to the second edge, and the fourth edge extends to a surface of the current collector.

In this embodiment, an edge of one side, away from the active layer, of the second insulating layer extends to the surface of the current collector, so that the second insulating layer can also be directly connected and adsorbed to a connecting surface of the current collector. This enhances connection strength between the second insulating layer and the connecting surface, reduces the risk of the first insulating layer and the connecting surface between the second insulating layer and the current collector being detached, increases connection strength between the first insulating layer and the connecting surface of the current collector and between the second insulating layer and the connecting surface of the current collector, and improves reliability of the battery electrode sheet.

In one of embodiments, the second edge extends to a surface, away from the current collector, of the active layer.

In this embodiment, the second insulating layer forms a wrapping region or lapping coverage for the entire first edge of the active layer, so that a gentle transition is formed at a connection position between the second insulating layer and the active layer, and the connection position between the second insulating layer and the active layer is not easy to form an obvious step. This is conducive to suppression of lithium precipitation for a lithium-ion battery, and enables the lithium-ion battery to have excellent cycle performance.

In one of embodiments, in a direction parallel to the connecting surface and in a direction away from the active layer, the first insulating layer has a first width, the second insulating layer has a second width, and the second width is less than or equal to the first width.

In this embodiment, a relative size of the first width of the first insulating layer and the second width of the second insulating layer is controlled, so that a relative position of the second insulating layer with respect to the first insulating layer can be flexibly adjusted. This reduces the risk of edge bulging of the battery and insulating layer detachment.

In one of embodiments, in a direction parallel to the connecting surface and in a direction away from the active layer, the first insulating layer has a first width, the second insulating layer has a second width, and the second width is greater than the first width, so that the second insulating layer extends to be connected to the connecting surface.

In this embodiment, a relative size of the first width of the first insulating layer and the second width of the second insulating layer is controlled, so that a relative position of the second insulating layer with respect to the first insulating layer can be flexibly adjusted. This reduces the risk of insulating layer detachment.

In one of embodiments, the first width is 1 mm to 20 mm; and/or
the second width is 1 mm to 20 mm.

In this embodiment, widths of the first insulating layer and the second insulating layer are adaptively designed according to the type of the battery, and 1 mm to 20 mm. This design is conducive to reducing a production cost while satisfying insulation performance requirements.

In one of embodiments, the first insulating layer has a first thickness, the second insulating layer has a second thickness, the active layer has a third thickness, and a sum of the first thickness and the second thickness is less than the third thickness; or the second thickness is less than the third thickness.

In this embodiment, a thickness of the active layer is increased, which helps to provide a sufficient energy storage capacity and an electrochemical reaction active surface area. A sum of a thickness of the first insulating layer and a thickness of the second insulating layer is less than the thickness of the active layer, which is conducive to reducing the manufacturing cost of the battery and helping to improve an energy density of the battery.

In one of embodiments, the second thickness is 3 µm to 50 µm.

In this embodiment, the thickness of the second insulating layer is controlled, so that electron and ion transmission paths inside the battery can be adjusted, charge and discharge performance, cycle life and safety performance of the battery can be optimized, space can be used to a greater extent, and a loading capacity of the active material can be increased. This increases energy density and power density of the battery.

In one of embodiments, the second thickness is 10 µm to 30 µm.

In this embodiment, the thickness of the second insulating layer is controlled between 10 µm and 30 µm. This can better adjust the electron and ion transmission paths inside the battery, optimize the charge and discharge performance, cycle life and safety performance of the battery, is conducive to improving heat conduction efficiency inside the battery, and helps to better dissipate heat and reduce heat accumulation, thereby improving safety and stability of the battery.

In one of embodiments, the first insulating layer includes a first solvent, the second insulating layer includes a second solvent, the active layer includes a third solvent, the third solvent is one of an aqueous solvent and an oily solvent, and the first solvent and/or the second solvent are the other of the aqueous solvent and the oily solvent.

In this embodiment, the active layer tends to undergo phase fusion and infiltration with the first insulating layer and the second insulating layer. Therefore, in a case where the active layer is in contact with the first insulating layer or the second insulating layer, the third solvent of the active layer may be selected to be a solvent incompatible with the first solvent and the second solvent, so that the risk of infiltration is not easy to occur between the active layer and the first insulating layer and between the active layer and the second insulating layer.

In one of embodiments, the third solvent and the second solvent are both oily solvents, and the first solvent is the aqueous solvent.

In this embodiment, when the electrode sheet is manufactured, the first insulating layer may be coated on the connecting surface, and the first solvent is the aqueous solvent with a relatively fast drying rate and a stronger bonding force. The first insulating layer is more firmly connected to the current collector, and the electrode sheet is environmentally friendly and low in cost. The second solvent and the third solvent are both oily solvents, so that the second insulating layer and the active layer can be coated at the same time, and the oily solvents have a better film-forming effect, which can improve compactness and consistency of a surface of the electrode sheet.

In a second aspect, the present application provides a battery that includes the battery cell in the above embodiments.

In a third aspect, the present application provides an electric device that includes the battery cell or the battery in the above embodiments, and the battery is used to supply electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

To describe technical solutions in embodiments of the present application more clearly, the following briefly describes the accompanying drawings for describing the embodiments of the present application or the prior art. It is clear that the accompanying drawings described in the following are merely some embodiments of the present application. Those skilled in the art can still derive other figures from these figures without creative efforts.
FIG. 1 is a schematic structural diagram of a vehicle according to some embodiments of the present application;
FIG. 2 is a first schematic diagram of an exploded structure of a battery according to some embodiments of the present application;
FIG. 3 is a second schematic diagram of an exploded structure of a battery according to some embodiments of the present application;
FIG. 4 is a schematic structural diagram of a connecting surface of a battery electrode sheet in a battery cell according to some embodiments of the present application;
FIG. 5 is a schematic structural diagram of a current collector of a battery electrode sheet in a battery cell after the current collector is coated with a first insulating layer according to some embodiments of the present application;
FIG. 6 is a schematic structural diagram of a current collector of a battery electrode sheet in a battery cell after the current collector is coated with a first insulating layer and an active layer according to some embodiments of the present application;
FIG. 7 is a schematic structural diagram of a current collector of a battery electrode sheet in a battery cell after the current collector is die-cut according to some embodiments of the present application;
FIG. 8 is a first view of A-A in FIG. 4;
FIG. 9 is a second view of A-A in FIG. 4;
FIG. 10 is a third view of A-A in FIG. 4;
FIG. 11 is a fourth view of A-A in FIG. 4;
FIG. 12 is a fifth view of A-A in FIG. 4;
FIG. 13 is a sixth view of A-A in FIG. 4;
FIG. 14 is a seventh view of A-A in FIG. 4;
FIG. 15 is an eighth view of A-A in FIG. 4;
FIG. 16 is a ninth view of A-A in FIG. 4; and
FIG. 17 is a tenth view of A-A in FIG. 4.

Description of reference signs:
1000, vehicle; 1100, battery; 1110, box body; 1111, first portion; 1112, second portion; 1113, accommodating space; 1120, battery cell; 1121, battery electrode sheet; 11211, current collector; 112111, connecting surface; 11212, first active layer; 112121, first edge; 11213, first insulating layer; 112131, second edge; 11214, second insulating layer; 112141, second edge; 112142, fourth edge; 11215, tab; B1, first thickness; B2, second thickness; B3, third thickness; D1, first spacing distance; D2, second spacing distance; L1, first width; L2, second width; 1200, controller; 1300, motor.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an internal communication between two elements or interaction between two elements. A person of ordinary skill in the art may understand the specific meanings of the above terms in the embodiments of the present application according to specific situations.

A battery cell in a battery generally includes a positive electrode sheet, a negative electrode sheet, a separator, a housing, and the like, the positive electrode sheet, the negative electrode sheet, and the separator are assembled by winding or laminating to form an electrode assembly, the electrode assembly may be understood as a cell, and the electrode assembly is placed in the housing and an electrolyte is injected into the housing to form the battery cell.

In a manufacturing process of battery electrode sheets, the positive electrode sheet and the negative electrode sheet need to be die-cut, and die-cutting of the battery electrode sheets refers to a processing process of cutting or slicing an original material into the battery electrode sheets of required sizes and shapes, for example, cutting out tabs. Die-cutting is one of key steps in a manufacturing process of the battery cell, and a die-cutting operation is usually performed by using a die-cutting machine or a cutting tool. The current collector is placed in an appropriate position and then an appropriate force or pressure is applied to cut the current collector into a desired shape and size, and cutting quality and accuracy directly affect performance and stability of the battery cell.

In a related art, when the electrode sheet is die-cut, burrs are easily generated at a cutting edge, and the burrs easily pierce the separator to cause the positive electrode sheet and the negative electrode sheet to be conductive, which cannot ensure insulation between the positive electrode sheet and the negative electrode sheet, resulting in a risk of short circuit.

Therefore, the present application provides a battery cell 1120, the battery cell 1120 includes a battery electrode sheet 1121, and the battery electrode sheet 1121 can enable a current collector 11211 to have reliable insulation, and can effectively wrap burrs generated during die-cutting, thereby reducing a risk of burr exposure. Because the burrs are wrapped, when the positive electrode sheet, the negative electrode sheet, and the separator are wound, a risk that the burrs pierce the separator is reduced, so that a risk of short circuit of the electrode assembly is reduced, helping improve reliability of the battery cell 1120.

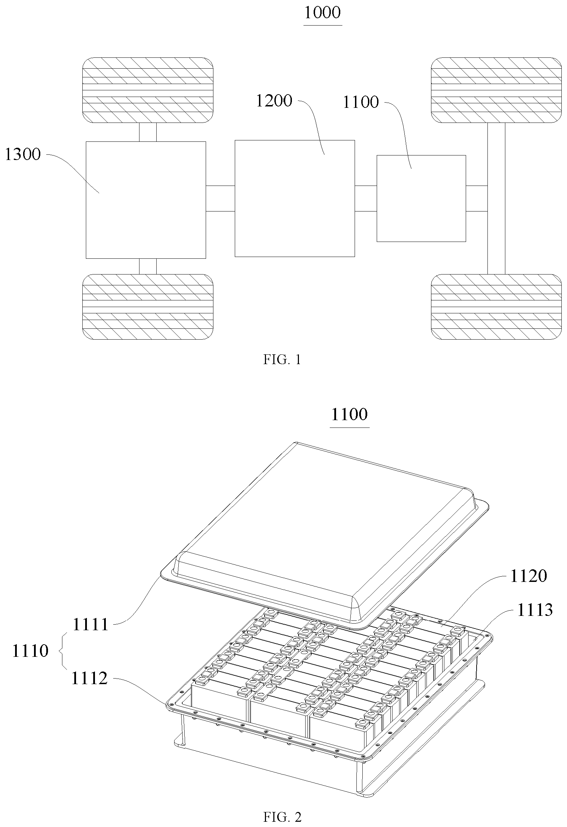

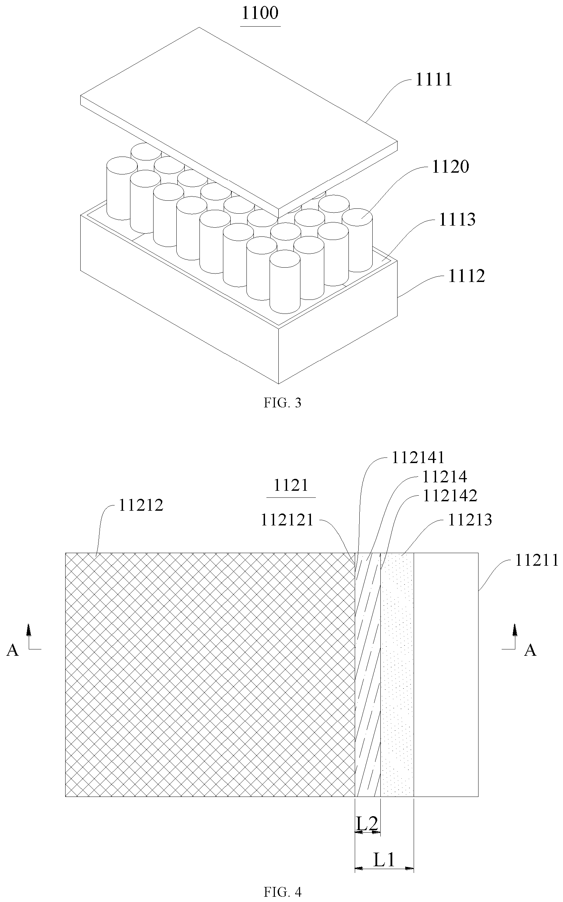

Specifically, with reference to FIG. 2 and FIG. 3, an embodiment of the present application provides a schematic diagram of an exploded structure of a battery 1100, the battery 1100 may include a battery cell 1120, and the battery 1100 disclosed in this embodiment of the present application may be used in an electric device that uses the battery 1100 as a power supply or various energy storage systems that use the battery 1100 as an energy storage component. The electric device can be, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

### Embodiment 1

With reference to FIG. 1, FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 1100 is provided, which may be provided at the bottom, head, or tail of the vehicle 1000. The battery 1100 may be configured to power the vehicle 1000. For example, the battery 1100 may be used as an operating power source of the vehicle 1000. The vehicle 1000 may further include a controller 1200 and a motor 1300, where the controller 1200 is configured to control the battery 1100 to power the motor 1300, for example, for a working power requirement of the vehicle 1000 during starting, navigating, and driving.

In some embodiments of the present application, the battery 1100 may be used not only as the operating power source of the vehicle 1000, but also as a driving power source of the vehicle 1000, instead of or partially instead of fuel or natural gas to provide driving power for the vehicle 1000.

With reference to FIG. 2 and FIG. 3, FIG. 2 and FIG. 3. are a schematic diagram of an exploded structure of a battery 1100 according to some embodiments of the present application. The battery 1100 includes a box body 1110 and a battery cell 1120. The battery cell 1120 is accommodated in the box body 1110. Here, the box body 1110 is configured to provide accommodating space 1113 for the battery cell 1120, and the box body 1110 may adopt multiple structures. In some embodiments, the box body 1110 may include a first portion 1111 and a second portion 1112, and the first portion 1111 and the second portion 1112 fit to each other to define the accommodating space 1113 for accommodating the battery cell 1120. The second portion 1112 may be of a hollow structure with an opening at one end, the first portion 1111 may be of a plate-shaped structure, and the first portion 1111 covers an opening side of the second portion 1112, such that the first portion 1111 and the second portion 1112 jointly define the accommodating space 1113. The first portion 1111 and the second portion 1112 may each be of a hollow structure with an opening in one side, with the opening side of the first portion 1111 covering the opening side of the second portion 1112. Certainly, the box body 1110 formed by the first portion 1111 and the second portion 1112 may be in various shapes such as a cylinder and a cuboid.

Certainly, the battery 1100 may be alternatively a battery 1100 module formed by connecting the plurality of battery cells 1120 in series, in parallel, or in a combination of both, and then a plurality of battery 1100 modules are integrated by series connection, parallel connection, or series-parallel connection. For example, the plurality of battery cells 1120 in the battery 1100 module are arranged in arrays and accommodated in the box body 1110. The battery 1100 may further include other structures. For example, the battery 1100 may further include a busbar component for implementing an electrical connection between the plurality of battery cells 1120.

The battery cell 1120 refers to a minimum unit constituting the battery 1100. Here, each battery cell 1120 may be a secondary battery or a primary battery, or may be a lithium-sulfur battery, a sodium-ion battery, or a magnesium-ion battery, but is not limited thereto. The battery cell 1120 may be in a shape of a cylinder, a flat body, a cuboid, or in other shapes.

The positive electrode sheet and the negative electrode sheet in the battery cell 1120 are two electrodes of the battery 1100, and play a vital role inside the battery 1100. The positive electrode sheet is usually made of one or more positive electrode active materials, such as oxides or phosphates, and the positive electrode sheet functions to accept electrons and release positive ions when the battery 1100 is discharged, and the positive ions migrate through the electrolyte, so that the battery cell 1120 generates current. The positive electrode sheet absorbs the electrons to store positive ions when the battery cell is charged. The negative electrode sheet is usually made of one or more negative electrode active materials, such as carbon or lithium, and the negative electrode sheet functions to release the electrons and absorb the positive ions when the battery cell 1120 is discharged, and the negative electrode sheet absorbs the positive ions and releases the electrons when the battery cell is charged. The positive electrode sheet and the negative electrode sheet play complementary roles in the battery cell 1120, and the battery cell 1120 can store and release energy through a chemical reaction during charging and discharging, and the chemical reaction is a basis for the battery cell 1120 to work, and is also a principle for the battery 1100 to provide electric energy.

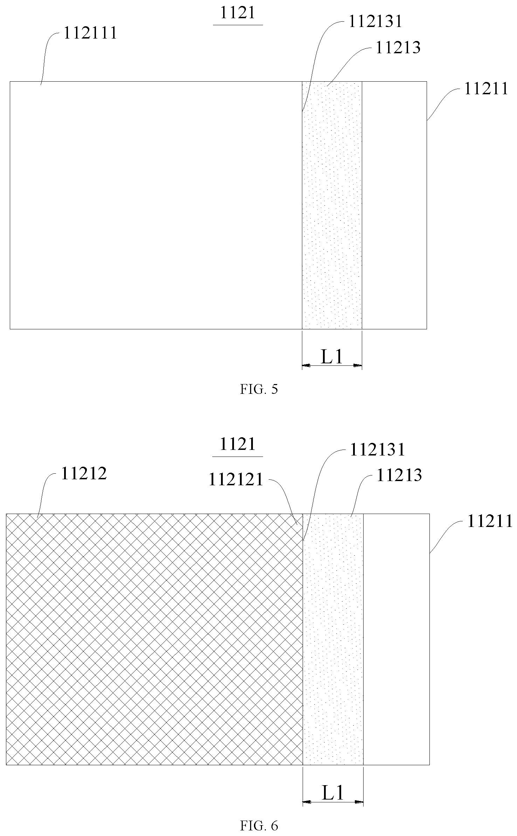

According to some embodiments of the present application, reference is made to FIG. 4 to FIG. 7. An embodiment of the present application provides a battery cell 1120 that includes a battery electrode sheet 1121, where the battery electrode sheet 1121 includes a current collector 11211, an active layer 11212, a first insulating layer 11213, and a second insulating layer 11214. A connecting surface 112111 is formed on the current collector 11211, the active layer 11212 covers part of the connecting surface 112111, and a first edge 112121 is formed on the connecting surface 112111. The first insulating layer 11213 covers part of the connecting surface 112111, and the first insulating layer 11213 is arranged to extend along the first edge 112121. The second insulating layer 11214 covers the first insulating layer 11213.

The battery electrode sheet 1121 may be the positive electrode sheet or the negative electrode sheet, the positive electrode sheet and the negative electrode sheet are wound or stacked to form a cell, the cell is one of core components of the battery 1100, the cell can convert chemical energy into electrical energy, a basic structure of the cell includes the positive electrode sheet, the negative electrode sheet, the electrolyte, the separator, and the tab 11215, and the tab 11215 includes a positive tab connected to the positive electrode sheet and a negative tab connected to the negative electrode sheet. The positive electrode sheet and the negative electrode sheet are separated by the electrolyte and the separator. During discharging, the positive electrode sheet and the negative electrode sheet undergo a redox reaction to generate a current. Types of cells include lithium-ion (Li-ion) cells, nickel-metal hydride (NiMH) cells, nickel-cadmium (NiCd) cells, and the like. The lithium-ion cell has characteristics such as high energy density and light weight.

Specifically, the current collector 11211 may be considered as a substrate layer of the battery electrode sheet 1121, and the current collector 11211 is mainly used as a conductor and a carrier of an active material (namely, the active layer 11212) in the battery cell 1120, aggregating and outputting a current generated by the active material or inputting an electrode current to the active material, thereby facilitating conversion between chemical energy and electrical energy. A function of the current collector 11211 is mainly to collect the current generated by the active material in the battery cell 1120 so as to form a larger current for output.

The current collector 11211 is of a sheet-like structure, the current collector 11211 is generally made of a metal foil, and the metal foil includes a copper foil, an aluminum foil, and the like. For example, a positive electrode sheet of the lithium battery 1100 may be the aluminum foil, the negative electrode sheet may be the copper foil, and both the copper foil and the aluminum foil have certain flexibility and can meet requirements of a winding process for cell manufacturing. In addition, the copper foil and the aluminum foil are thin, which can improve an energy density of the lithium ion battery 1100.

The current collector 11211 is of a sheet-like structure, so it can be seen that the current collector 11211 has two surfaces that are disposed opposite to each other and have a larger area, and the connecting surface 112111 may be any one of the two surfaces of the current collector 11211, that is, any one surface of the current collector 11211 is covered with the active layer 11212. Of course, there may be two connecting surfaces 112111, that is, the two opposite surfaces of the current collector 11211 are respectively two connecting surfaces 112111, and the two connecting surfaces 112111 of the current collector 11211 are both covered with the active layers 11212. The connecting surface 112111 may be a flat surface or a curved surface.

The connecting surface 112111 of the current collector 11211 may be divided into a first connecting surface and a second connecting surface. It should be noted that division of the two regions is set for subsequently defining positions of the active layer 11212 and the first insulating layer 11213, and the first connecting surface and the second connecting surface are virtually defined, and do not represent actual division of the connecting surface 112111. The first connecting surface and the second connecting surface may be two adjacent regions, or the first connecting surface and the second connecting surface may also be two regions spaced apart on the connecting surface 112111.

The active layer 11212 covers the first connecting surface, and the active layer 11212 is formed with a first edge 112121 on the first connecting surface, the first edge 112121 refers to a boundary position of the active layer 11212 coated on the first connecting surface, and the first edge 112121 is an edge of the active layer 11212 corresponding to the first insulating layer 11213. The first insulating layer 11213 covers the second connecting surface, and the first insulating layer 11213 is coated along an extending direction of the first edge 112121, so that the first insulating layer 11213 can extend parallel to the first edge 112121 of the active layer 11212 on both sides.

The active layer 11212 is a material layer located on the connecting surface 112111 of the current collector 11211, and the active layer 11212 participates in electrochemical reaction of the battery cell 1120, and adsorption and release of lithium ions occur during charging and discharging. Presence of the active layer 11212 increases an effective surface area of the battery electrode sheet 1121, thereby improving performance and energy density of the battery cell 1120.

For example, in a lithium-ion battery cell 1120, a material of the active layer 11212 of the positive electrode sheet may be a lithium-ion compound, correspondingly, a material of the active layer 11212 of the negative electrode sheet may be a carbon material, and the negative electrode sheet absorbs the lithium ions during charging and releases the lithium ions after charging, thereby achieving charging and discharging of the battery cell 1120.

For the positive electrode sheet, the active layer 11212 usually includes a lithium ion compound, for example, cobalt oxide and nickel manganese cobalt oxide. Specifically, the active layer 11212 may adopt a lithium cobalt oxide coating, a lithium iron phosphate coating, a lithium manganate coating, and the like. The above compound can absorb the lithium ions during charging to form a lithium compound, and release the lithium ions after charging.

For the negative electrode sheet, the active layer 11212 of the negative electrode sheet generally includes a carbon material, for example, graphite. The carbon material has good conductivity and stability, and can effectively absorb and release the lithium ions, thereby achieving charging and discharging of the battery 1100.

The active layer 11212 is connected to the connecting surface 112111 of the current collector 11211 and covers part of the connecting surface 112111 (specifically, the first connecting surface), where the active layer 11212 may be connected to the current collector 11211 in a coating manner. The active layer 11212 covers the connecting surface 112111, and the first edge 112121 is formed at an edge of the active layer 11212, that is, a boundary of the active layer 11212 formed on the current collector 11211. The first edge 112121 may be configured in any desired profile; for example, the first edge 112121 may extend in a linear form, including straight lines, curved lines, and irregular composite curved profiles.

The first insulating layer 11213 may be made of a polymer film (for example, polypropylene, polyethylene, and polyimide), a ceramic material (for example, alumina), a composite material, a glass fiber material, or the like. Specifically, for example, the first insulating layer 11213 may be made of one or more of boehmite, calcium oxide, magnesium oxide, calcium carbonate, and the like.

The first insulating layer 11213 is connected to the connecting surface 112111 of the current collector 11211, and the first insulating layer 11213 covers part of the connecting surface 112111 (specifically, the second connecting surface), the first insulating layer 11213 plays an insulating role on the current collector 11211, the first insulating layer 11213 can reduce the risk of short circuit and electric leakage of the battery 1100, and the first insulating layer 11213 on the current collector 11211 can effectively reduce the risk of direct contact between the positive electrode sheet and the negative electrode sheet, thereby reducing a probability of short circuit or electric leakage of the battery cell 1120. In addition, the first insulating layer 11213 can effectively improve insulation performance of the battery cell 1120, reduce current conduction between the electrode sheet and an external environment, and reduce electrical contact between the battery 1100 and the external environment, so that the battery cell 1120 can work normally in an environment free from external interference as much as possible. Furthermore, the first insulating layer 11213 can also play a role in protecting the current collector 11211, and the first insulating layer 11213 can reduce the erosion and damage of the current collector 11211 by the external environment, especially in a high-temperature, high-humidity and corrosive environment, the first insulating layer 11213 forms protection for the surface of the current collector 11211, which is conducive to prolong the service life of the electrode sheet.

In the manufacturing process of the battery 1100, part of the connecting surface 112111 of the current collector 11211 is used to coat the active layer 11212, and a remaining part of the connecting surface 112111 may be considered as a blank area and is used to coat the first insulating layer 11213, so that the first insulating layer 11213 extends along the first edge 112121 of the active layer 11212, and the first insulating layer 11213 can protect a position of the first edge 112121 of the active layer 11212. The first insulating layer 11213 may be in contact with the first edge 112121 of the active layer 11212, or the first insulating layer 11213 may be spaced apart from the first edge 112121 of the active layer 11212.

The second insulating layer 11214 also has an insulating property and function, and the second insulating layer 11214 may also be made of a polymer film (for example, polypropylene, polyethylene, and polyimide), a ceramic material (for example, alumina), a composite material, a glass fiber material, or the like. Specifically, for example, the first insulating layer 11213 may be made of one or more of boehmite, calcium oxide, magnesium oxide, calcium carbonate, and the like.

The second insulating layer 11214 is connected to the first insulating layer 11213 and is located on one side, facing away from the current collector 11211, of the first insulating layer 11213. For example, in a case where the current collector 11211 is placed horizontally, it can be considered that the first insulating layer 11213 is located above the current collector 11211, and the second insulating layer 11214 is located above the first insulating layer 11213.

In a specific manufacturing process of the battery electrode sheet 1121, the current collector 11211 is prepared, and then the active layer 11212 is coated on part of the connecting surface 112111 of the current collector 11211, and forms the first edge 112121 on the current collector 11211. Subsequently, the first insulating layer 11213 is coated on part of the connecting surface 112111 along the edge of the active layer 11212, the first insulating layer 11213 extends along the first edge 112121 of the active layer 11212, and the second insulating layer 11214 is coated on a side surface, facing away from the current collector 11211, of the first insulating layer 11213. After coating, the current collector 11211 may be die-cut, and the die-cut position is an overlapping position of the second insulating layer 11214 and the first insulating layer 11213.

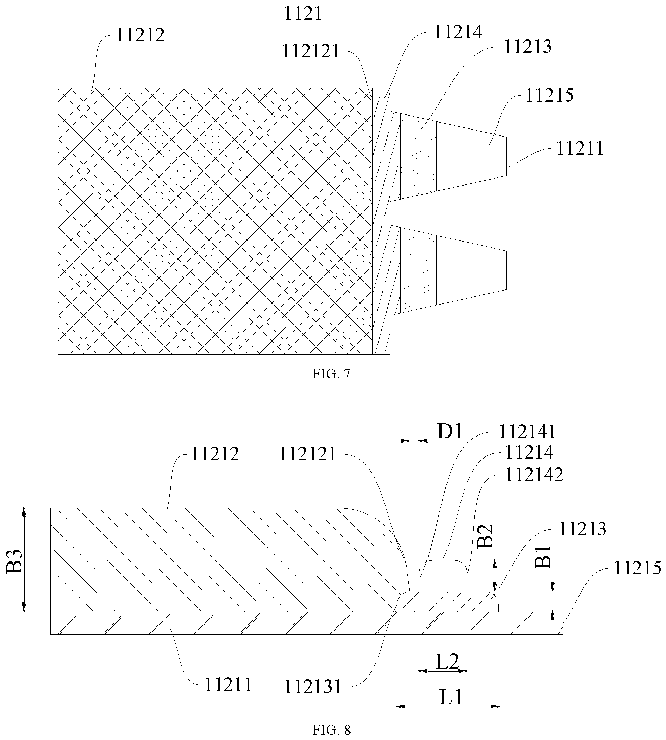

The overlapping position of the second insulating layer 11214 and the first insulating layer 11213 is a die-cutting position (or cutting position) of the battery electrode sheet 1121, that is, a die-cutting knife of a die-cutting device simultaneously cuts the current collector 11211, the first insulating layer 11213 and the second insulating layer 11214. The second insulating layer 11214 is coated on the first insulating layer 11213, which can increase an overall thickness of the insulating layer. The current collector 11211 is die-cut. With reference to FIG. 7, the tab 11215 can be directly die-cut, and during die-cutting, the second insulating layer 11214 and the first insulating layer 11213 can form a thicker and more complete package for the burrs formed on the cutting edge of the current collector 11211, thereby reducing the risk of exposure of the burrs. In addition, the second insulating layer 11214 and the first insulating layer 11213 are stacked to form a composite insulating coating, so that the entire insulating layer is more flexibly prepared. Furthermore, when the insulating layer is coated, the first insulating layer 11213 is coated, and a thickness of the first insulating layer 11213 can be appropriately reduced, which is conducive to reducing space occupied on the surface of the current collector 11211, saving larger space, and facilitating formation of sufficient space for a position of the tab 11215 when the electrode sheet is wound, thereby reducing the risk of edge bulging of the battery electrode sheet 1121. Moreover, the first insulating layer 11213 is coated, so that the first insulating layer 11213 can be dried more quickly, and then the second insulating layer 11214 can be continuously coated on the first insulating layer 11213, and two coating processes are adopted. This is more conducive to achieving quick drying of the insulating layer. Compared with a case of coating a thicker insulating layer at one time, coating a thicker insulating layer at one time improves performance requirements of a coating device. The problem of drying needs to be considered, a thicker coating thickness reduces a coating rate, so the two coating processes are adopted in the present application. This is more conducive to improving drying efficiency, so as to improve coating efficiency of the insulating layer, and further improve production efficiency of the electrode sheet.

In this embodiment, the first insulating layer 11213 and the second insulating layer 11214 are respectively coated and covered at a die-cutting position of the current collector 11211, so that the first insulating layer 11213 is directly connected to the current collector 11211, and the first insulating layer 11213 can play a role of insulating the current collector 11211, thereby reducing a risk of short circuit and electric leakage between the electrode sheets during winding. The second insulating layer 11214 covers the first insulating layer 11213, thereby increasing the overall thickness of the insulating layer, and the current collector 11211, the first insulating layer 11213 and the second insulating layer 11214 are cut at the same time during die-cutting, so that the first insulating layer 11213 and the second insulating layer 11214 form a thicker package for the cutting position of the current collector 11211, so that the burrs are not easily exposed, the risk of exposure of the burrs is reduced, and the risk of short circuit of the battery cell 1120 is reduced.

In some embodiments, with reference to FIG. 8 to FIG.13, the second insulating layer 11214 has a second edge 112141 disposed close to the first edge 112121 of the active layer 11212, and the second edge 112141 is spaced apart from the first edge 112121.

Materials of the insulating layer have different thermal stability. When thermal stability of the materials is higher, the costs of the materials are higher. When the electrode sheet is manufactured, the materials of the insulating layer need to be adaptively selected in consideration of a production cost.

When the thermal stability of the materials of the insulating layer is relatively low, a temperature inside the battery 1100 rises during the use of the battery 1100, which readily compromises the thermal stability of the insulating layer. The insulating layer is easy to fuse and infiltrate with the active layer 11212, so that a boundary between the active layer 11212 and the insulating layer is unclear. This brings many risks to the use of the battery 1100, for example, the unclear boundary between the active layer 11212 and the insulating layer may cause performance of the battery 1100 to degrade. A main function of the insulating layer is to prevent the active layer 11212 from being in direct contact with the electrolyte so as to reduce the risk of short circuit. If the boundary is unclear, a possibility of short circuit may be increased, resulting in unstable performance of the battery 110. In addition, the unclear boundary may cause unnecessary chemical reactions during charging and discharging of the battery 1100, thereby increasing the risk of heating or even fire of the battery 1100. Moreover, the unclear boundary of the active layer 11212 and the insulating layer may cause excessive diffusion of the active material in the active layer 11212 during charging and discharging of the battery 1100, accelerate aging of the battery 1100, shorten service life of the battery 1100, and the like.

Therefore, for a relative position design of the insulating layer and the active layer 11212, various factors such as performance and cost of the battery 1100 need to be considered. Specifically, in the present application, it is considered that the first insulating layer 11213 mainly plays an insulating role, so that the active layer 11212 is not easy to contact with the electrolyte and other electrode sheets, the second insulating layer 11214 covers an upper portion of the first insulating layer 11213 to increase a thickness of the entire insulating layer and especially increase a thickness of the die-cutting position. The second insulating layer 11214 is also used to wrap the burrs while playing an insulating role. Therefore, a coating thickness of the first insulating layer 11213 can be appropriately reduced to facilitate cost saving. Given a small thickness of the first insulating layer 11213 and comprehensive cost considerations, the first insulating layer 11213 can be made of a material having higher thermal stability, and the second insulating layer 11214 can be made of a material having relatively lower cost and lower thermal stability than the first insulating layer 11213, and the second insulating layer 11214 and the active layer 11212 are spaced apart from each other.

Specifically, the second insulating layer 11214 and the active layer 11212 are spaced apart from each other, that is, the second insulating layer 11214 does not contact the active layer 11212, so that the risk of fusion and infiltration between the second insulating layer 11214 and the active layer 11212 is reduced, which is conducive to improving reliability of the battery 1100 during use.

Furthermore, the second insulating layer 11214 is spaced apart from the active layer 11212, which is conducive to increasing space, facilitates folding of the tabs 11215, and further reduces the risk of edge bulging during winding.

In this embodiment, the second insulating layer 11214 is spaced apart from the active layer 11212, and the second insulating layer 11214 can be made of a material having relatively low cost and relatively low thermal stability, thereby reducing a production cost of the battery electrode sheet 1121. In addition, spacing is provided, which is conducive to folding of the tabs 11215 and reduces a risk of edge bulging of the battery electrode sheet 1121.

In some embodiments, with reference to FIG. 8 to FIG.13, the first insulating layer 11213 has a third edge 112131 disposed close to the first edge 112121, and the third edge 112131 is connected to or spaced apart from the first edge 112121.

Specifically, the first insulating layer 11213 and the active layer 11212 are both coated on the connecting surface 112111 of the current collector 11211, so the first insulating layer 11213 and the active layer 11212 may be connected or spaced apart. The first insulating layer 11213 is spaced apart from the active layer 11212, which can further increase the space, facilitate folding of the tabs 11215, and further reduce the risk of edge bulging of the battery electrode sheet 1121.

In addition, on a premise that the production cost is reduced, the first insulating layer 11213 may also be made of a same material as the second insulating layer 11214, and the first insulating layer 11213 is spaced apart from the active layer 11212, and the first insulating layer 11213 does not contact the active layer 11212, so that the risk of fusion and infiltration between the first insulating layer 11213 and the active layer 11212 is reduced. This is conducive to improving reliability of the battery 1100 during use and achieving the purpose of reducing the production cost.

When the first insulating layer 11213 is connected to the active layer 11212, the first insulating layer 11213 may be made of a material having higher thermal stability than the second insulating layer 11214. Since the coating thickness of the first insulating layer 11213 is relatively thin, the production cost is not greatly increased, but the thermal stability of the entire electrode sheet can be improved.

In some embodiments, with reference to FIG. 8 to FIG. 13, first spacing is formed between the second edge 112141 and the first edge 112121 of the active layer 11212, and the first spacing space has a first spacing distance D1 in a direction parallel to the connecting surface 112111, and the first spacing distance D1 is greater than 0 mm and less than or equal to 3 mm.

Specifically, since the active layer 11212 and the first insulating layer 11213 are both coated on the connecting surface 112111 of the current collector 11211, the second insulating layer 11214 is coated on the first insulating layer 11213. An edge (or boundary line), close to the active layer 11212, of the second insulating layer 11214 is set as the second edge 112141, and it can be seen that the first spacing is formed between the second edge 112141 and the first edge 112121 of the active layer 11212. It can be considered that, in the direction parallel to the connecting surface 112111, the distance between the second edge 112141 and the first edge 112121 (boundary line) of the active layer 11212 is the first spacing distance D1, or more specifically, a distance between a projection line of the boundary line (second edge 112141) of the edge, close to the active layer 11212, of the second insulating layer 11214 on the connecting surface 112111 and a projection line of the first edge 112121 (boundary line) of the active layer 11212 on the connecting surface 112111 is the first spacing distance D1.

A value of the first spacing distance D1 directly affects the folding space of the tab 11215 of the battery electrode sheet 1121 and the energy density of the battery 1100, and an increased value of the first spacing distance D1 is conducive to increasing the folding space of the tab 11215, which facilitates further folding of the tab 11215 and reduces the risk of edge bulging of the battery electrode sheet 1121. However, when the first spacing distance D1 is too large, for example, greater than 3 mm, the energy density of the battery 1100 is lost. Therefore, in practical applications, a range of the first spacing distance D1 is preferably set to be greater than 0 mm and less than or equal to 3 mm, for example, the first spacing distance D1 may be 0.5 mm, 1.0 mm, 1.5 mm, 2.0 mm, 2.5 mm, 3.0 mm, and the like.

In a case where the third edge 112131 is spaced apart from the first edge 112121 of the active layer 11212, second spacing is formed between the third edge 112131 and the first edge 112121 of the active layer 11212, and the second spacing has a second spacing distance D2 in the direction parallel to the connecting surface 112111, and the second spacing distance D2 may be greater than or equal to the first spacing distance D1, or the second spacing distance D2 may be less than or equal to the first spacing distance D1.

In this embodiment, the range of the first spacing distance D1 is set to be greater than 0 mm and less than or equal to 3 mm, which is conducive to ensure that the tab 11215 has sufficient folding space, reduce the risk of edge bulging of the battery electrode sheet 1121, and is not easy to cause the energy density loss of the battery 1100, which is conducive to ensure the performance stability of the battery 1100.

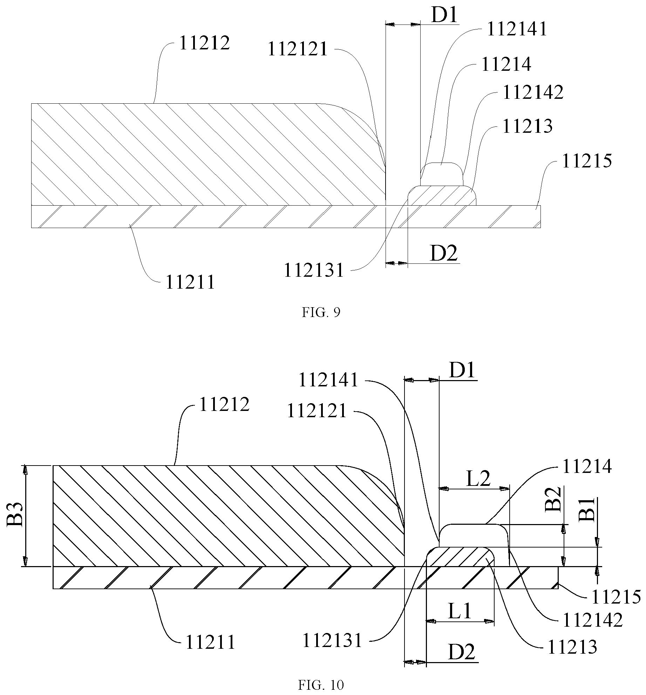

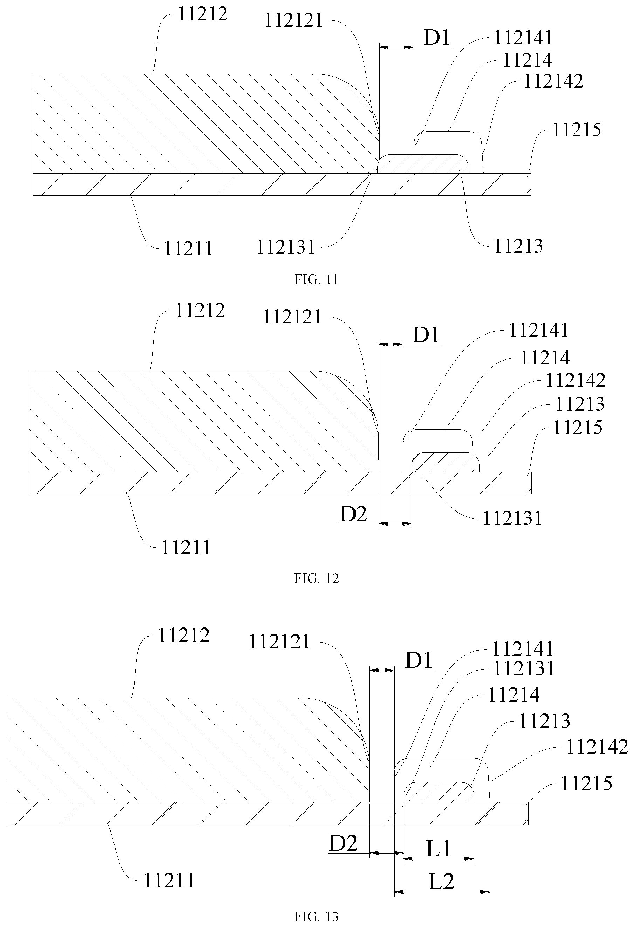

In some embodiments, with reference to FIG. 10 and FIG. 11, the second insulating layer 11214 further has a fourth edge 112142 disposed away from the active layer 11212, the fourth edge 112142 is disposed opposite to the second edge 112141, and the fourth edge 112142 extends to the surface of the current collector 11211.

Specifically, in the manufacturing process of the battery electrode sheet 1121, the first insulating layer 11213 is coated prior to the second insulating layer 11214, and the first insulating layer 11213 is coated and connected to the surface of the current collector 11211. When the second insulating layer 11214 is coated, the second insulating layer 11214 may be directly coated on a surface, facing away from the connecting surface 112111, of the first insulating layer 11213. Since an overall thickness of the first insulating layer 11213 and the second insulating layer 11214 on the connecting surface 112111 is increased, stress between the first insulating layer 11213 and the connecting surface 112111 changes, a thickened insulating layer as a whole causes a phenomenon that the first insulation layer 11213 is prone to separating from the connecting surface 112111, and stability of connection between the first insulating layer 11213 and the second insulating layer 11214 on the battery electrode sheet 1121 and the current collector 11211 is reduced.

Therefore, in this embodiment, an edge (that is, the fourth edge 112142) of one side, away from the active layer 11212, of the second insulating layer 11214 extends to the surface of the current collector 11211, so that the second insulating layer 11214 can be connected to the connecting surface 112111 of the current collector 11211 while being connected to the first insulating layer 11213, and a connection and adsorption force between the second insulating layer 11214 and the connecting surface 112111 of the current collector 11211 is formed. Therefore, in a case where the insulating layer is thickened as a whole, both the first insulating layer 11213 and the second insulating layer 11214 can also maintain a firm connection force with the connecting surface 112111, which is conducive to reducing the risk of the first insulating layer 11213 and the second insulating layer 11214 being detached from the connecting surface 112111 of the current collector 11211.

In this embodiment, the second insulating layer 11214 is connected to the first insulating layer 11213, so that the insulating layer at the die-cutting position of the electrode sheet can be further thickened. This improves the wrapping effect of the burrs at the die-cutting position and reduces the risk of exposure of the burrs. Further, the fourth edge 112142 extends to the surface of the current collector 11211, so that the second insulating layer 11214 can also be directly connected and adsorbed to a connecting surface 112111 of the current collector 11211. This enhances connection strength between the second insulating layer 11214 and the connecting surface 112111, reduces the risk of the first insulating layer 11213 and the second insulating layer 11214 being detached from the connecting surface 112111 of the current collector 11211, increases connection strength between the first insulating layer 11213 and the connecting surface 112111 of the current collector 11211 and between the second insulating layer 11214 and the connecting surface 112111 of the current collector 11211, and improves reliability of the battery electrode sheet 1121.

In some embodiments, with reference to FIG. 12 and FIG. 13, in a case where the third edge 112131 is spaced apart from the first edge 112121, the second edge 112141 extends to the surface of the current collector 11211.

Specifically, the third edge 112131 is an edge of one side, close to the active layer 11212, of the first insulating layer 11213. In a case where the third edge 112131 is spaced apart from the first edge 112121 of the active layer 11212, that is, the first insulating layer 11213 is not in contact with the active layer 11212, the second spacing is formed between the first insulating layer 11213 and the active layer 11212, and the second spacing has a second spacing distance D2. The second spacing distance D2 may be considered as a spacing distance between a projection line of a boundary line of an edge (the third edge 112131) of one side, close to the active layer 11212, of the first insulating layer 11213 on the connecting surface 112111 and a projection line of a boundary line of the first edge 112121 of the active layer 11212 on the connecting surface 112111, so that the second spacing distance D2 is greater than the first spacing distance D1, and it can be seen that the edge of one side, close to the active layer 11212, of the second insulating layer 11214 is closer to the active layer 11212 than the edge of one side, close to the active layer 11212 of the first insulating layer 11213.

The second spacing is formed between the first insulating layer 11213 and the active layer 11212, which can reduce the risk of direct contact between the active layer 11212 and the electrolyte, and limit interaction between the active layer 11212 and the electrolyte. This reduces the risk of short circuit of the battery 1100, and helps maintain stability of the battery 1100. Other coatings may be further added in the second spacing to meet characteristic requirements of the battery 1100. For example, an isolation layer may be added in the second spacing to enhance an isolation effect between the active layer 11212 and the electrolyte, which is conducive to prolonging the service life of the battery 1100.

The second insulating layer 11214 extends to the surface of the current collector 11211 close to the side of the active layer 11212, which is conducive to limiting interaction between the active layer 11212 and the electrolyte and enhancing insulation performance. In addition, the second insulating layer 11214 extends into the second spacing, that is, the second insulating layer 11214 extends in a direction away from the tab 11215 and is connected to the connecting surface 112111, which is conducive to reserving more space for a position of the tab 11215, ensuring that the tab 11215 has sufficient folding space, and reducing the risk of edge bulging of the battery electrode sheet 1121. The second insulating layer 11214 can be connected to the connecting surface 112111 of the current collector 11211 while being connected to the first insulating layer 11213, so that a connection and adsorption force between the second insulating layer 11214 and the connecting surface 112111 of the current collector 11211 is formed. Therefore, in a case where the insulating layer is thickened as a whole, both the first insulating layer 11213 and the second insulating layer 11214 can also maintain a firm connection force with the connecting surface 112111, which is conducive to reducing the risk of the first insulating layer 11213 and the second insulating layer 11214 being detached from the connecting surface 112111 of the current collector 11211.

In this embodiment, the second edge 112141 extends to the surface of the current collector 11211, and the second insulating layer 11214 is connected to the first insulating layer 11213, so that the insulating layer at the die-cutting position of the electrode sheet can be further thickened. This improves the wrapping effect of the burrs at the die-cutting position and reduces the risk of exposure of the burrs. Further, the second edge 112141 extends to the surface of the current collector 11211, so that the second insulating layer 11214 can also be directly connected and adsorbed to a connecting surface 112111 of the current collector 11211. This enhances connection strength between the second insulating layer 11214 and the connecting surface 112111, reduces the risk of the first insulating layer 11213 and the second insulating layer 11214 being detached from the connecting surface 112111 of the current collector 11211, increases connection strength between the first insulating layer 11213 and the connecting surface 112111 of the current collector 11211 and between the second insulating layer 11214 and the connecting surface 112111 of the current collector 11211, and improves reliability of the battery electrode sheet 1121. In addition, this is also conducive to limiting interaction between the active layer 11212 and the electrolyte and enhancing insulation performance.

In some embodiments, with reference to FIG. 4 and FIG. 8, in the direction parallel to the connecting surface 112111 and in the direction away from the active layer 11212, the first insulating layer 11213 has a first width L1, the second insulating layer 11214 has a second width L2, and the second width L2 is less than or equal to the first width L1.

Specifically, a width refers to a distance by which the first insulating layer 11213 and the second insulating layer 11214 respectively extend in the direction parallel to the connecting surface 112111 from one side close to the active layer 11212 toward the direction away from the active layer 11212. When the battery electrode sheet 1121 is die-cut, a die-cutting direction needs to be perpendicular to a width direction of the first insulating layer 11213 and the second insulating layer 11214. In consideration of machining errors, the perpendicularity may have an error range of ±10°.

If the second width L2 is less than or equal to the first width L1, it can be seen that, in one case, the second insulating layer 11214 may be entirely located on one side, facing away from the current collector 11211, of the first insulating layer 11213, so that the second insulating layer 11214 is not in contact with the connecting surface 112111 of the current collector 11211. This forms more space on the electrode sheet, enlarges the folding space of the tab 11215, and mitigates a problem of edge bulging during winding of the electrode sheet. In another case, one side of the second insulating layer 11214 extends to the connecting surface 112111 of the current collector 11211, so that a connection and adsorption force between the second insulating layer 11214 and the connecting surface 112111 of the current collector 11211 is formed. Therefore, in a case where the insulating layer is thickened as a whole, both the first insulating layer 11213 and the second insulating layer 11214 can also maintain a firm connection force with the connecting surface 112111, which is conducive to reducing the risk of the first insulating layer 11213 and the second insulating layer 11214 being detached from the connecting surface 112111 of the current collector 11211.

In this embodiment, a relative size of the first width L1 of the first insulating layer 11213 and the second width L2 of the second insulating layer 11214 is controlled, so that a relative position of the second insulating layer 11214 with respect to the first insulating layer 11213 can be flexibly adjusted. This reduces the risk of edge bulging of the battery 1100 and insulating layer detachment.

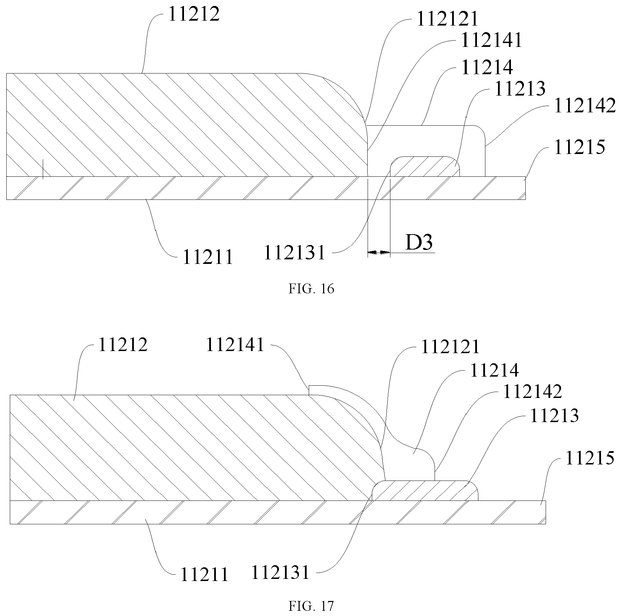

In some embodiments, with reference to FIG. 13 and FIG. 16, in the direction parallel to the connecting surface 112111 and in the direction away from the active layer 11212, the first insulating layer 11213 has the first width L1, the second insulating layer 11214 has the second width L2, and the second width L2 is greater than the first width L1, so that the second insulating layer 11214 extends to be connected to the connecting surface 112111.

Specifically, the second width L2 is greater than the first width L1, and it can be seen that, in one case, one side of the second insulating layer 11214 extends to the connecting surface 112111 of the current collector 11211, so that a connection and adsorption force between the second insulating layer 11214 and the connecting surface 112111 of the current collector 11211 is formed. Therefore, in a case where the insulating layer is thickened as a whole, both the first insulating layer 11213 and the second insulating layer 11214 can also maintain a firm connection force with the connecting surface 112111, which is conducive to reducing the risk of the first insulating layer 11213 and the second insulating layer 11214 being detached from the connecting surface 112111 of the current collector 11211. In another case, both sides of the second insulating layer 11214 extend to the connecting surface 112111 of the current collector 11211, and the second insulating layer 11214 wraps the first insulating layer 11213 outside the first insulating layer 11213, so that a larger connecting force between the second insulating layer 11214 and the connecting surface 112111 of the current collector 11211 is formed. Therefore, in a case where the insulating layer is thickened as a whole, both the first insulating layer 11213 and the second insulating layer 11214 can also maintain a firm connection force with the connecting surface 112111, which is conducive to reducing the risk of the first insulating layer 11213 and the second insulating layer 11214 being detached from the connecting surface 112111 of the current collector 11211.

In this embodiment, a relative size of the first width L1 of the first insulating layer 11213 and the second width L2 of the second insulating layer 11214 is controlled, so that a relative position of the second insulating layer 11214 with respect to the first insulating layer 11213 can be flexibly adjusted. This reduces the risk of insulating layer detachment.

In some embodiments, the first width L1 is 1 mm to 20 mm.

Specifically, a width of the first insulating layer 11213 is 1 mm to 20 mm, and the first width L1 may be any value between 1 mm and 20 mm, for example, the first width L1 may be 5 mm, 10 mm, 15 mm, and the like.

In this embodiment, the width of the first insulating layer 11213 is adaptively designed according to the type of the battery 1100, and 1 mm to 20 mm. This design is conducive to reducing a production cost while satisfying insulation performance requirements.

In some embodiments, the second width L2 is 1 mm to 20 mm.

Specifically, a width of the second insulating layer 11214 is 1 mm to 20 mm, and the second width L2 may be any value between 1 mm and 20 mm, for example, the second width L2 may be 5 mm, 10 mm, 15 mm, and the like.

In this embodiment, the width of the second insulating layer 11214 is adaptively designed according to the type of the battery 1100, and 1 mm to 20 mm. This design is conducive to reducing a production cost while satisfying insulation performance requirements.

In some embodiments, with reference to FIG. 8 to FIG.16, the first insulating layer 11213 has a first thickness B1, the second insulating layer 11214 has a second thickness B2, the active layer 11212 has a third thickness B3, and a sum of the first thickness B1 and the second thickness B2 is less than the third thickness B3; or the second thickness B2 is less than the third thickness B3. It can be seen that the first thickness B1 is less than the third thickness B3, and the second thickness B2 is less than the third thickness B3.

Specifically, the third thickness B3 and the first thickness B1 refer to a distance or height that a substance extends from the connecting surface 112111 of the current collector 11211 in the direction perpendicular to the connecting surface 112111 and away from the connecting surface 112111. As shown in FIG. 8, FIG. 9 and FIG. 14, when the second insulating layer 11214 is only connected to the first insulating layer 11213, the second thickness B2 may be defined as the distance or height extending from a surface connected to the first insulating layer 11213 in the direction perpendicular to the surface and away from the surface. In this case, the sum of the first thickness B1 and the second thickness B2 is less than the third thickness B3, that is, the sum of the thicknesses of the first insulating layer 11213 and the second insulating layer 11214 is less than the thickness of the active layer 11212. As shown in FIG. 10 to FIG.13, 15 and 16, in a case where the second insulating layer 11214 is also in contact with the connecting surface 112111, the thickness of the second insulating layer 11214 may be defined as the distance or height extending from the connecting surface 112111 of the current collector 11211 in the direction perpendicular to the connecting surface 112111 and away from the connecting surface 112111, and in this case, the second thickness B2 is less than the third thickness B3. That is, in a case where the current collector 11211 is horizontally placed, an upper surface, away from the current collector 11211, of the second insulating layer 11214 is located below an upper surface of the active layer 11212.

The active layer 11212 is a main electrochemically active portion of the battery electrode sheet 1121, and needs to provide sufficient conductivity to support transport of electrons and ions, so the active layer 11212 is usually thick to ensure sufficient active material mass and surface area. The first insulating layer 11213 and the second insulating layer 11214 are mainly used as isolation layers of the battery 1100 to reduce the risk of short circuit between different components inside the battery 1100, so the thicknesses of the first insulating layer 11213 and the second insulating layer 11214 may be thinner than the thickness of the active layer 11212.

Furthermore, internal space of the battery 1100 is a limited and needs to be used as effectively as possible, so the first insulating layer 11213 and the second insulating layer 11214 are designed to be thinner than the active layer 11212. This can maximize space utilization, and increases the loading capacity of the active material in the active layer 11212, and is conducive to increasing the energy density and power density of the battery 1100.

In addition, the thicknesses of the first insulating layer 11213 and the second insulating layer 11214 are controlled, the electron and ion transmission paths inside the battery 1100 can be adjusted, and the charge and discharge performance, cycle life and safety performance of the battery 1100 can be optimized.

Moreover, design of the first insulating layer 11213 and the second insulating layer 11214 that are thinner means less material consumption and a more simplified manufacturing process, thereby being conducive to reducing the manufacturing cost of the battery 1100 and improving the manufacturing efficiency of the battery electrode sheet 1121.

In this embodiment, a thickness of the active layer 11212 is increased, which helps provide a sufficient energy storage capacity and an electrochemical reaction active surface area. A sum of the first thickness B1 and the second thickness B2 is less than the third thickness B3, thereby being conducive to reducing the manufacturing cost of the battery 1100 and helping improve the energy density of the battery 1100.

In some embodiments, the thickness of the second thickness B2 is 3 µm to 50 µm.

The thickness of the second insulating layer 11214 is 3 µm to 50 µm, the thickness of the active layer 11212 is greater than the thickness of the second insulating layer 11214, the thickness of the active layer 11212 may be 30 µm to 100 µm, and the thickness of the second insulating layer 11214 is controlled to be 3 µm to 50 µm. In this embodiment, the thickness of the second insulating layer 11214 is controlled, so that electron and ion transmission paths inside the battery 1100 can be adjusted, charge and discharge performance, cycle life and safety performance of the battery 1100 can be optimized, space can be used to a greater extent, and a loading capacity of the active material can be increased. This increases energy density and power density of the battery 1100.

In some embodiments, the thickness of the second thickness B2 is 10 µm to 30 µm.

In this embodiment, the thickness of the second insulating layer 11214 is further controlled between 10 µm and 30 µm. This can better adjust the electron and ion transmission paths inside the battery 1100, optimize the charge and discharge performance, cycle life and safety performance of the battery 1100, is conducive to improving heat conduction efficiency inside the battery 1100, and helps to better dissipate heat and reduce heat accumulation, thereby improving safety and stability of the battery 1100.

In some embodiments, the first insulating layer 11213 includes a first solvent, the second insulating layer 11214 includes a second solvent, the active layer 11212 includes a third solvent, the third solvent is one of an aqueous solvent and an oily solvent, and the first solvent and/or the second solvent are the other of the aqueous solvent and the oily solvent.

Specifically, there is a risk of fusion and mutual infiltration between the active layer 11212 and the first insulating layer 11213 and between the active layer 11212 and the second insulating layer 11214. Therefore, when the electrode sheet is manufactured, in addition to problems such as mutual positions, thicknesses, and widths of the active layer 11212, the first insulating layer 11213 and the second insulating layer 11214, problems such as phase fusion and mutual infiltration of the solvent in the active layer 11212, the first insulating layer 11213, and the second insulating layer 11214 should also be considered, thereby mitigating a problem of unclear interfaces between the active layer 11212 and the first insulating layer 11213 and between the active layer 11212 and the second insulating layer 11214 caused by mutual infiltration of the solvent.

In this embodiment, both the first insulating layer 11213 and the second insulating layer 11214 may include boehmite, calcium carbonate, paraffin, and the like. The first insulating layer 11213 further includes a first solvent, and the first solvent may be an aqueous solvent or an oily solvent. Correspondingly, the second solvent may also be the aqueous solvent or the oily solvent, and the first solvent and the second solvent may be a same solvent or different solvents. Compatibility of the third solvent differs from that of the first solvent and the second solvent. For example, when the third solvent is the aqueous solvent, both the first solvent and the second solvent may be oily solvents; or one of the first solvent and the second solvent is the aqueous solvent, and the other is the oily solvent.

The aqueous solvent is a solvent containing water as a main component, the aqueous solvent is highly environmentally friendly, and the aqueous solvent usually has a relatively fast drying speed, which is conducive to coating on the current collector 11211 and facilitates rapid drying. The oily solvent is a solvent containing an organic solvent as a main component.

In this embodiment, the active layer 11212 tends to undergo phase fusion and infiltration with the first insulating layer 11213 and the second insulating layer 11214. Therefore, in a case where the active layer 11212 is in contact with the first insulating layer 11213 or the second insulating layer 11214, the third solvent of the active layer 11212 may be selected to be a solvent incompatible with the first solvent and the second solvent, so that the risk of infiltration is not easy to occur between the active layer 11212 and the first insulating layer 11213 and between the active layer 11212 and the second insulating layer 11214.

In some embodiments, the third solvent and the second solvent are both oily solvents, and the first solvent is the aqueous solvent.

Specifically, the first solvent in the first insulating layer 11213 and the third solvent in the active layer 11212 are prepared by materials that do not fuse with each other and do not infiltrate each other. The active layer 11212 adopts an oil-based formulation, and the third solvent is an oil-based solvent. For example, the oil-based solvent may be an oil-based binder such as polyacrylic acid. The first insulating layer 11213 is prepared by an aqueous formulation, for example, the first solvent is prepared by an aqueous binder, such as polyvinylidene fluoride, so that the risk of fusion and infiltration of the first insulating layer 11213 and the active layer 11212 is small.

Under specific working conditions, the second insulating layer 11214 needs to be made of a material having compatibility close to that of the active layer 11212. In this case, the second insulating layer 11214 also adopts the oily formulation, and the second solvent is the oily solvent. For example, the oily solvent is an oily binder, such as polyacrylic acid. In this case, the second insulating layer 11214 and the active layer 11212 need to be spaced apart to reduce the risk of mutual infiltration between the second insulating layer 11214 and the active layer 11212.

In this embodiment, when the electrode sheet is manufactured, the first insulating layer 11213 may be coated on the connecting surface 112111, and the first solvent is the aqueous solvent with a relatively fast drying rate and a stronger bonding force. The first insulating layer is more firmly connected to the current collector 11211, and the electrode sheet is environmentally friendly and low in cost. The second solvent and the third solvent are both oily solvents, so that the second insulating layer and the active layer 11212 can be coated at the same time, and the oily solvents have a better film-forming effect, which can improve compactness and consistency of a surface of the electrode sheet.

In a specific embodiment, with reference to FIG. 4 to FIG.13, the battery cell 1120 includes a battery electrode sheet 1121, where the battery electrode sheet 1121 includes a current collector 11211, an active layer 11212, a first insulating layer 11213, and a second insulating layer 11214. A connecting surface 112111 is formed on the current collector 11211, the active layer 11212 covers part of the connecting surface 112111, and a first edge 112121 is formed on the connecting surface 112111. The first insulating layer 11213 covers part of the connecting surface 112111, and the first insulating layer 11213 is arranged to extend along the first edge 112121. The second insulating layer 11214 covers the first insulating layer 11213. The second insulating layer 11214 has a second edge 112141 disposed close to the first edge 112121, the second edge 112141 is spaced apart from the first edge 112121, the first insulating layer 11213 has a third edge 112131 disposed close to the first edge 112121, and the third edge 112131 is connected to or spaced apart from the first edge 112121. First spacing is formed between the second edge 112141 and the first edge 112121, and the first spacing space has a first spacing distance D1 in a direction parallel to the connecting surface 112111, and the first spacing distance D1 is greater than 0 mm and less than or equal to 3 mm. The second insulating layer 11214 further has a fourth edge 112142 disposed away from the active layer 11212, the fourth edge 112142 is disposed opposite to the second edge 112141, and the fourth edge 112142 extends to the surface of the current collector 11211. In a case where the third edge 112131 is spaced apart from the first edge 112121, the second edge 112141 extends to the surface of the current collector 11211. The thickness of the second insulating layer 11214 is 10 µm to 30 µm. The first insulating layer 11213 includes a first solvent, the second insulating layer 11214 includes a second solvent, the active layer 11212 includes a third solvent, the third solvent is one of an aqueous solvent and an oily solvent, and the first solvent and/or the second solvent are the other of the aqueous solvent and the oily solvent. The third solvent and the second solvent are both oily solvents, and the first solvent is the aqueous solvent.

Based on the foregoing battery cell 1120, the present application further provides an embodiment of a battery 1100. As shown in FIG. 2 and FIG. 3, the battery 1100 includes the battery cell 1120 according to any one of the foregoing embodiments.

In this embodiment, the battery 1100 includes a box body 1110 and a battery cell 1120. The battery cell 1120 is accommodated in the box 1110. The battery 1100 may include one battery cell 1120, and the battery 1100 may also include a plurality of battery cells 1120. When the battery 1100 is provided with a plurality of battery cells 1120, the plurality of battery cells 1120 may be arranged according to a predetermined pattern. The plurality of battery cells 1120 may be arranged in one row and multiple columns or in multiple rows and multiple columns. The plurality of battery cells 1120 may be connected in series, in parallel, or in series-parallel.

It can be understood that this embodiment is only an illustration of the battery 1100 including the battery cell 1120, and the battery 1100 may further include other functional components. Details are not described herein again.

The embodiment of the battery 1100 in the present application is based on the embodiment of the battery cell 1120 described above, and achieves all the technical effects of the embodiment of the battery cell 1120 described above. Details are not described herein again.

In some embodiments, refer to FIG. 1. An electric device is disclosed, and the electric device includes the battery cell 1120 described in any of the above embodiments, or the battery 1100 described in any of the above embodiments.

The electric device in this embodiment includes, but is not limited to: For a mobile phone, a portable device, a notebook computer, an electric vehicle, an electric vehicle, a ship, a spacecraft, an electric toy, an electric tool, and the like, the battery cell 1120 in any one of the foregoing embodiments may be separately mounted in an electric device, and the foregoing battery 1100 may also be mounted in the electric device.

The embodiment of the electric device in the present application is based on the embodiment of the battery cell 1120 or the battery 1100 described above, and the embodiment of the electric device achieves all the technical effects of the embodiment of the battery cell 1120 or the battery 1100 described above. Details are not described herein again.

### Embodiment 2

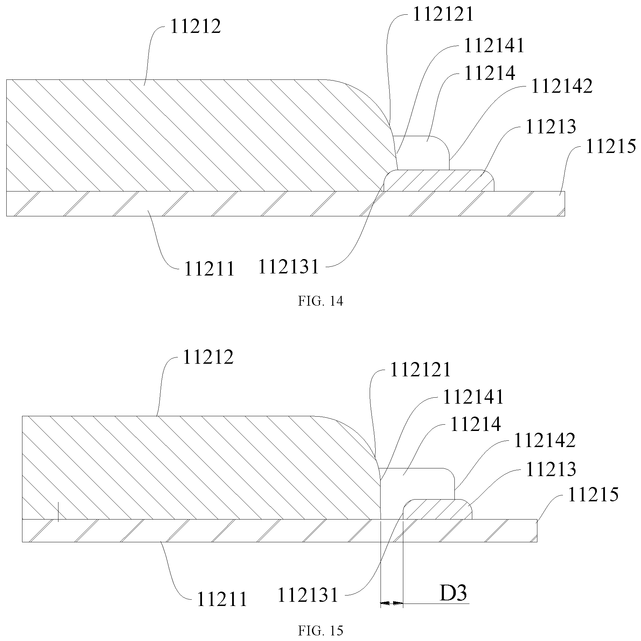

Different from the first embodiment, in some embodiments and with reference to FIG. 14 to FIG. 17, the second insulating layer 11214 has a second edge 112141 disposed close to the first edge 112121, and the second edge 112141 is disposed in contact with the first edge 112121 of the active layer 11212.

Specifically, for the battery 1100 with relatively high thermal stability requirements, the second insulating layer 11214 may be directly made of a material having higher thermal stability. When the temperature inside the battery 1100 rises, the thermal stability of the second insulating layer 11214 is not easily impaired, and fusion and infiltration hardly occur between the second insulating layer 11214 and the active layer 11212, so the second insulating layer 11214 may be directly in contact with the active layer 11212. In a case where the width of the second insulating layer 11214 is determined, the second insulating layer 11214 is directly in contact with the active layer 11212, so that larger space is formed outside one side, away from the active layer 11212, of the second insulating layer 11214. The tab 11215 is formed on or connected to an outer side, away from the active layer 11212, of the second insulating layer 11214, so that larger space is formed at the position of the tab 11215. This increases the folding space of the tab 11215, and is conducive to reducing the problem of edge bulging during winding of the electrode sheet.

The first insulating layer 11213 may be in contact with the first edge 112121 of the active layer 11212, or may be spaced apart from the first edge 112121 of the active layer 11212. In a case where the first insulating layer 11213 is in contact with the active layer 11212, any two of the first insulating layer 11213, the second insulating layer 11214 and the active layer 11212 are connected. This improves integrity of the first insulating layer 11213, the second insulating layer 11214 and the active layer 11212, enables more reliable connection between an overall structure formed by the first insulating layer 11213, the second insulating layer 11214 and the active layer 11212, and the connecting surface 112111 of the current collector 11211, and renders the electrode sheet more compact in overall structure with improved structural damage resistance.

In a case where the first insulating layer 11213 is spaced apart from the active layer 11212, third spacing is formed between an edge (namely, the third edge 112131) of one side, close to the active layer 11212, of the first insulating layer 11213 and the first edge 112121 of the active layer 11212. In the direction parallel to the connecting surface 112111, the third spacing has a third spacing distance, and one side (the second edge 112141), close to the active layer 11212, of the second insulating layer 11214 extends into the third spacing and is in contact with and connected to the connecting surface 112111 of the current collector 11211, so that the second insulating layer 11214 can be connected to the active layer 11212 and the connecting surface 112111 at the same time, connection strength between the second insulating layer 11214 and the current collector 11211 is enhanced, and structural stability of the second insulating layer 11214 is improved.

In a case where the first insulating layer 11213 is spaced apart from the active layer 11212, the first insulating layer 11213 can be made of a material having lower thermal stability than the second insulating layer 11214. Since the first insulating layer 11213 and the active layer 11212 are spaced apart and thus hardly undergo fusion and infiltration, the manufacturing cost of the electrode sheet is further reduced.

In this embodiment, the second insulating layer 11214 covers an upper portion of the first insulating layer 11213, so that the second insulating layer 11214 is directly connected to the active layer 11212. This improves overall consistency between the active layer 11212 and the second insulating layer 11214 on the connecting surface 112111 of the current collector 11211 and the connection strength between the second insulating layer 11214 and the active layer 11212, and enhances overall stability of the electrode sheet.

In some embodiments, with reference to FIG. 16, the second edge 112141 is disposed in contact with the first edge 112121 of the active layer 11212, the second insulating layer 11214 has a fourth edge 112142 disposed away from the first edge 112121, the fourth edge 112142 is disposed opposite to the second edge 112141, and the fourth edge 112142 extends to the surface of the current collector 11211.

Similarly, in the manufacturing process of the battery electrode sheet 1121, the first insulating layer 11213 is coated prior to the second insulating layer 11214, and the first insulating layer 11213 is coated and connected to the surface of the current collector 11211. When the second insulating layer 11214 is coated, the second insulating layer 11214 may be directly coated on a surface, facing away from the connecting surface 112111, of the first insulating layer 11213. Since an overall thickness of the first insulating layer 11213 and the second insulating layer 11214 on the connecting surface 112111 is increased, stress between the first insulating layer 11213 and the connecting surface 112111 changes, a thickened insulating layer as a whole causes a phenomenon that the first insulation layer 11213 is prone to separating from the connecting surface 112111, and stability of connection between the first insulating layer 11213 and the second insulating layer 11214 on the battery electrode sheet 1121 and the current collector 11211 is reduced.

Therefore, in this embodiment, the fourth edge 112142 extends to the surface of the current collector 11211, so that the second insulating layer 11214 can be connected to the connecting surface 112111 of the current collector 11211 while being connected to the first insulating layer 11213 and the active layer 11212, and a connection and adsorption force between the second insulating layer 11214 and the connecting surface 112111 of the current collector 11211 is formed. Therefore, in a case where the insulating layer is thickened as a whole, both the first insulating layer 11213 and the second insulating layer 11214 can also maintain a firm connection force with the connecting surface 112111, which is conducive to reducing the risk of the first insulating layer 11213 and the second insulating layer 11214 being detached from the connecting surface 112111 of the current collector 11211.

In this embodiment, the fourth edge 112142 extends to the surface of the current collector 11211, so that the second insulating layer 11214 can also be directly connected and adsorbed to a connecting surface 112111 of the current collector 11211. This enhances connection strength between the second insulating layer 11214 and the connecting surface 112111, reduces the risk of the first insulating layer 11213 and the second insulating layer 11214 being detached from the connecting surface 112111 of the current collector 11211, increases connection strength between the first insulating layer 11213 and the connecting surface 112111 of the current collector 11211 and between the second insulating layer 11214 and the connecting surface 112111 of the current collector 11211, and improves reliability of the battery electrode sheet 1121.

In some embodiments, with reference to FIG. 17, the second edge 112141 extends to a surface of one side, away from the current collector 11211, of the active layer 11212.

Specifically, the second edge 112141 is not only in contact with the active layer 11212, but also extends to the surface of the side, away from the current collector 11211. of the active layer 11212 along the surface of the first edge 112121, for example, in a case where the current collector 11211 is horizontally disposed, the surface of the side, away from the current collector 11211, of the active layer 11212 is the upper surface of the active layer 11212.

In this embodiment, the second insulating layer 11214 extends to the upper surface of the active layer 11212, so that the second insulating layer 11214 forms a wrapping region or lapping coverage for the entire first edge 112121 of the active layer 11212. A gentle transition is formed at a connection position between the second insulating layer 11214 and the active layer 11212, so that the connection position between the second insulating layer 11214 and the active layer 11212 is not easy to form an obvious step. This is conducive to suppression of lithium precipitation for a lithium-ion battery 1100, and enables the lithium-ion battery 1100 to have excellent cycle performance.

The above are only preferred embodiments of the present application, which only specifically describe the technical principles of the present application. These descriptions are only used to explain the principles of the present application, and cannot be interpreted in any way as limiting the scope of protection of the present application. Based on the explanation here, any modification, equivalent replacement, or improvement made within the spirit and principle of the present application, as well as other specific implementations of the present application that a person skilled in the art could think of without creative efforts shall be included in the scope of protection of the present application.

## Claims

1. A battery cell, comprising: a battery electrode sheet, wherein the battery electrode sheet comprising:
a current collector, a connecting surface being formed on the current collector;
an active layer, covering part of the connecting surface, wherein a first edge is formed on the connecting surface;
a first insulating layer, covering part of the connecting surface, wherein the first insulating layer extends along the first edge; and
a second insulating layer, covering the first insulating layer.

2. The battery cell according to claim 1, wherein the second insulating layer has a second edge disposed close to the first edge, and the second edge is spaced apart from the first edge.

3. The battery cell according to claim 1 or 2, wherein the first insulating layer has a third edge disposed close to the first edge, and the third edge is connected to or spaced apart from the first edge.

4. The battery cell according to claim 2, wherein first spacing is formed between the second edge and the first edge, the first spacing has a first spacing distance in a direction parallel to the connecting surface, and the first spacing distance is greater than 0 mm and less than or equal to 3 mm.

5. The battery cell according to claim 2, wherein the second insulating layer further has a fourth edge disposed away from the active layer, the fourth edge is disposed opposite to the second edge, and the fourth edge extends to a surface of the current collector.

6. The battery cell according to claim 2, wherein the second edge extends to a surface of the current collector.

7. The battery cell according to claim 1, wherein the second insulating layer has a second edge disposed close to the first edge, and the second edge is disposed in contact with the first edge.

8. The battery cell according to claim 7, wherein the second insulating layer has a fourth edge disposed away from the first edge, the fourth edge is disposed opposite to the second edge, and the fourth edge extends to a surface of the current collector.

9. The battery cell according to claim 7, wherein the second edge extends to a surface, away from the current collector, of the active layer.

10. The battery cell according to claim 1, wherein in a direction parallel to the connecting surface, the first insulating layer has a first width, the second insulating layer has a second width, and the second width is less than or equal to the first width.

11. The battery cell according to claim 1, wherein in a direction parallel to the connecting surface, the first insulating layer has a first width, the second insulating layer has a second width, and the second width is greater than the first width.

12. The battery cell according to claim 10 or 11, wherein the first width is 1 mm to 20 mm; and/or the second width is 1 mm to 20 mm.

13. The battery cell according to any one of claims 1 to 9, wherein the first insulating layer has a first thickness, the second insulating layer has a second thickness, the active layer has a third thickness, and a sum of the first thickness and the second thickness is less than the third thickness; or the second thickness is less than the third thickness.

14. The battery cell according to claim 13, wherein the second thickness is 3 µm to 50 µm.

15. The battery cell according to any one of claims 1 to 9, wherein the first insulating layer comprises a first solvent, the second insulating layer comprises a second solvent, the active layer comprises a third solvent, the third solvent is one of an aqueous solvent and an oily solvent, and the first solvent and/or the second solvent are the other of the aqueous solvent and the oily solvent.

16. The battery cell according to claim 15, wherein the third solvent and the second solvent are both oily solvents, and the first solvent is the aqueous solvent.

17. A battery, comprising the battery cell according to any one of claims 1 to 16.

18. An electric device, comprising the battery cell according to any one of claims 1 to 16 or the battery according to claim 17.
